# EUROPÄISCHE PATENTSCHRIFT

(11) **EP 3 516 246 B1**
(45) Veröffentlichungstag und Bekanntmachung des Hinweises auf die Patenterteilung: **18.08.2021**
(21) Anmeldenummer: 17768055.0
(22) Anmeldetag: 07.09.2017
(51) Int. Cl.: F16C 35/04, F16H 57/01, F16C 41/00, G01M 13/02, G01M 13/04

(54) **HAUPTLAGERUNG FÜR EINE WINDENERGIEANLAGE, SOWIE VERFAHREN ZUR SICHTPRÜFUNG AN WÄLZLAGERN ODER ZAHNRÄDERN IN HAUPTLAGERUNGEN VON WINDENERGIEANLAGEN**
MAIN MOUNT FOR A WIND TURBINE AND METHOD FOR VISUAL INSPECTION OF ROLLING BEARINGS OR GEARS IN MAIN MOUNTS OF WIND TURBINES
PALIER PRINCIPAL POUR UNE ÉOLIENNE ET PROCÉDÉ DE CONTRÔLE VISUEL AU NIVEAU DE PALIERS À ROULEMENT OU DE ROUES DENTÉES DANS DES PALIERS PRINCIPAUX D'ÉOLIENNES

(30) Priorität: 19.09.2016 DE 102016217924
(43) Veröffentlichungstag der Anmeldung: 31.07.2019
(73) Patentinhaber: RWE Renewables GmbH, 45145 Essen (DE)
(72) Erfinder: FRANKE, Jan-Bernd, 52336 Elmshorn (DE); KIND, Wolf, 21481 Lauenburg (DE)
(74) Vertreter: Keenway Patentanwälte Neumann Heine Taruttis
(86) Internationale Anmeldenummer: PCT/EP2017/072443
(87) Internationale Veröffentlichungsnummer: WO 2018/050532

(56) Entgegenhaltungen:
- EP-A1- 2 888 577
- EP-A2- 2 610 578
- EP-B1- 2 273 111
- CN-A- 101 260 907
- CN-U- 202 867 590
- DE-A1-102010 005 511
- US-A- 3 884 098
- US-A- 4 798 299
- US-A1- 2007 107 504
- US-A1- 2014 096 601

## Beschreibung

Die Erfindung betrifft eine Hauptlagerung für eine Windenergieanlage, sowie ein Verfahren zur Sichtprüfung an Wälzlagern oder Zahnrädern in Hauptlagerungen von Windenergieanlagen.

Die Erfindung betrifft weiterhin ein Getriebe sowie ein Verfahren zur Sichtprüfung an Wälzlagern oder Zahnrädern in Getrieben.

Ein Getriebe für eine Windenergieanlage ist beispielsweise aus der EP 2 273 111 B1 bekannt. Diese Druckschrift betrifft ein mehrstufiges Getriebe einer Windenergieanlage und zeigt den Oberbegriff des Anspruchs 2, wobei das Getriebe ein Getriebegehäuse aufweist, wobei an der Außenseite des Getriebegehäuses wenigstens eine Zugangsöffnung zum Einbringen eines Arbeitsinstruments in das Getriebegehäuse vorgesehen ist und wobei im Inneren des Getriebegehäuses ein Führungsmittel für das Arbeitsinstrument ortsfest angeordnet ist. Das Führungsmittel ist beispielsweise ein innerhalb des Getriebegehäuses verlegtes Führungsrohr, durch welches ein Arbeitsinstrument in das Getriebegehäuse eingeführt werden kann, nachdem ein Inspektionsdeckel des Getriebegehäuses entfernt wurde. Innerhalb des Getriebegehäuses ist wenigstens eine optische Einrichtung, ein Spiegel oder ein Prisma oder dergleichen angeordnet, wobei unter Verwendung der optischen Einrichtung und unter Verwendung des mithilfe des Führungsrohres eingebrachten Arbeitsinstruments das Innere des Getriebegehäuses geprüft werden kann.

Für die visuelle Begutachtung von Maschinen werden zunehmend Videoskope eingesetzt, mit deren Optiken bis zu einigen Metern weit in Maschinengehäuse, Getriebegehäuse oder dergleichen vorgedrungen werden kann. Das Einführen der Optik und das Erreichen des Inspektionsortes erfordern großes handwerkliches Geschick. Dabei ist es nicht oder nicht hinreichend möglich, definierte Betrachtungswinkel oder Entfernungen zum Inspektionsort zu reproduzieren. Insbesondere bei der Bewertung von Verschleißzuständen von Wälzlagern oder bei der Bewertung von Schäden an Zahnrädern werden hohe Anforderungen an die Genauigkeit und Reproduzierbarkeit von Betrachtungswinkel und Entfernung gestellt. Mit einer manuellen Führung der videoskopischen Vorrichtung bzw. des Endoskops lässt sich in der Regel keine Reproduzierbarkeit erreichen.

Die in der zuvor erwähnten EP 2 273 111 B1 beschriebene Anordnung des Führungsmittels innerhalb des Getriebegehäuses ist insoweit nicht vorteilhaft, als das Führungsmittel nicht bis zum Inspektionsort verlegt werden kann. Sollen beispielsweise der Verschleißzustand oder ein Schädigungszustand eines Wälzlagers beurteilt werden, so wäre es dazu erforderlich, dass Führungsmittel bis zum Inspektionsort zu verlegen, was allerdings einen dauerhaften Verbleib des Führungsmittels innerhalb des Getriebegehäuses unmöglich macht. Bei Inbetriebnahme des Getriebes würde das Führungsmittel unweigerlich mit der Bahn der Wälzkörper kollidieren. Auch die Begutachtung des Verschleißzustandes von Zahnflanken an Zahnrädern ist auf diese Art und Weise nicht möglich. Deswegen ist es bei Getrieben oder Hauptlagerungen gemäß Stand der Technik, wie auch bei dem Getriebe, welches in der EP 2 273 111 B1 beschrieben ist, erforderlich, Teile der optischen Einrichtung dauerhaft innerhalb des Getriebegehäuses anzuordnen. Eine Führung des Endoskops oder der Sonde kann nur über eine Teilstrecke von einer Zugangsöffnung bis zu dem Inspektionsort bewerkstelligt werden. Diese Anordnung hat darüber hinaus den Nachteil, dass die Teile der optischen Einrichtung, die im Getriebegehäuse verbleiben, unter Umständen durch im Getriebe vagabundierende Schmiermittel verunreinigt werden. Zur Vermeidung von Kollisionen ist ein Mindestabstand zwischen Führungsmittel und Inspektionsort einzuhalten. Durch diesen Mindestabstand entsteht eine gewisse Strecke, bei der das Endoskop nicht abgestützt, sondern frei ist. Dadurch wird die Reproduzierbarkeit von Betrachtungswinkel und Entfernung zum Inspektionsort stark reduziert.

Aus der US-A-3 884 098 ist ein Planetengetriebe bekannt, bei welchem das Gehäuse des Getriebes Schaulochdeckel aufweist, wobei nach dem Entfernen der Schaulochdeckel an den Bohrungen Zugangsöffnungen bereitgestellt werden, sodass ein Endoskop durch die Bohrungen in einen Planetenradträger eingeführt werden kann. Eine präzise Führung eines Endoskops ist wegen des großen Abstandes zwischen Führungsmittel und Inspektionsort nicht zu bewerkstelligen.

DE 10 2010 005 511 zeigt eine Hauptlagerung gemäß dem Oberbegriff des Anspruchs 1 und ein Verfahren gemäß dem Oberbegriff des Anspruchs 10.

Der Erfindung liegt daher die Aufgabe zugrunde, eine Hauptlagerung für eine Windenergieanlage oder ein Getriebe, insbesondere ein Getriebe für eine Windenergieanlage, sowie ein Verfahren zur Sichtprüfung von Wälzlagern oder Zahnrädern in Hauptlagerungen von Windenergieanlagen oder in Getrieben bereitzustellen, welche das exakte und reproduzierbare Einführen und Annähern einer Sonde und insbesondere eines Endoskops oder Videoskops an einen Inspektionsort ermöglichen.

Die Aufgabe wird gelöst mit den Merkmalen der Ansprüche 1, 2 und 10. Vorteilhafte Ausgestaltungen der Erfindung ergeben sich aus den Unteransprüchen.

Ein Gesichtspunkt der Erfindung betrifft eine Hauptlagerung für eine Windenergieanlage, mit einem Lagergehäuse mit einer verschließbaren Durchführung in einer Wand des Lagergehäuses für ein Führungsmittel zur Führung einer Sonde in das Lagergehäuse, wobei das Führungsmittel ein Kupplungsstück aufweist, das mit dem Führungsmittel verbunden ist, dass Kupplungsstück lösbar in die Durchführung eingesetzt und in dieser festgelegt ist, wobei das Kupplungsstück komplementär zu der Durchführung ausgebildet ist, dass Kupplungsstück die Durchführung in eingesetztem Zustand verschließt und das Kupplungsstück eine Ausrichtung des Führungsmittels an einen Inspektionsort innerhalb des Lagergehäuses vorgibt und wobei das Führungsmittel nur an dem Kupplungsstück festgelegt ist.

Grundsätzlich kann das Kupplungsstück unverlierbar an dem Führungsmittel befestigt sein. Als Durchführung des Getriebegehäuses kann beispielsweise eine kreisrunde Bohrung durch eine Wand des Getriebegehäuses vorgesehen sein. Die Durchführung kann mittels eines Verschlussdeckels oder Verschlussstopfens verschlossen sein. Bedarfsweise kann der Verschlussdeckel oder der Verschlussstopfen durch das Kupplungsstück mit dem an diesem vorgesehenen Führungsmittel ausgetauscht werden.

Der Erfindung liegt der Gedanke zugrunde, das Führungsmittel nur temporär in das Getriebegehäuse einzusetzen und hierfür eine Durchführung durch eine Wand des Getriebegehäuses bereitzustellen. Mittels eines hierfür vorgesehenen Kupplungsstücks, das mit dem Führungsmittel verbunden ist, wird in vorteilhafter Art und Weise die Ausrichtung des Führungsmittels vorgegeben, wenn das Kupplungsstück in die Durchführung eingesetzt ist. Auf diese Art und Weise lässt sich die Anordnung und Ausrichtung des Führungsmittels reproduzierbar gestalten. Dies kann beispielsweise unter anderem durch eine entsprechende Indexierung des Kupplungsstücks erreicht werden. Alternativ kann die Indexierung auch auf dem Führungsmittel angebracht sein, in Form einer geradlinigen Skala, an der die Einführungstiefe abgelesen werden kann. Durch eine kreisförmige Skala auf dem Kupplungsstück kann die Orientierung des Führungsmittels in dem Getriebegehäuse abgelesen werden. Durch die geradlinigen und kreisförmigen Skalen lässt sich die Positionierung des Führungsmittels eindeutig reproduzieren.

Die Gestalt des Führungsmittels kann so sein, dass das Führungsmittel in direkter Nähe des Inspektionsortes verbringbar ist.

Mittels des Kupplungsstücks und der Gestaltung des Führungsmittels ist vorzugsweise der Betrachtungswinkel des Inspektionsorts festgelegt.

Inspektionsort ist die Laufbahn eines Wälzlagers. Verbleibt das Führungsmittel nicht dauerhaft innerhalb des Getriebegehäuses, wie das erfindungsgemäß vorgesehen ist, wird eine Kollision mit den Wälzkörpern des Wälzlagers zuverlässig verhindert.

Eine vorteilhafte Variante der Hauptlagerung gemäß der Erfindung zeichnet sich dadurch aus, dass das Führungsmittel als Führungsrohr ausgebildet ist.

Die Durchführung kann beispielsweise einen Befestigungsflansch für das Kupplungsstück aufweisen. Das Kupplungsstück kann einen Befestigungsflansch aufweisen, der komplementär zu dem Befestigungsflansch der Durchführung bzw. des Lagergehäuses ausgebildet ist. Durch eine entsprechende Indexierung des Befestigungsflansches kann die Winkellage des Kupplungsstücks festgelegt sein.

Alternativ oder zusätzlich kann die Durchführung ein Schraubgewinde aufweisen, welches komplementär zu einem Schraubgewinde des Kupplungsstücks ausgebildet ist. Auf diese Art und Weise lässt sich das Kupplungsstück in besonders einfache Art und Weise in die Durchführung des Lagergehäuses einsetzen.

Besonders vorteilhaft ist es, wenn das Kupplungsstück eine Gleitpassung für das Führungsrohr aufweist. Das Führungsrohr kann beispielsweise das Kupplungsstück durchsetzen und in diesem festgeklemmt sein. Beispielsweise kann das Kupplungsstück hierzu eine Klemmbefestigung oder ein Spannfutter für das Führungsrohr umfassen.

Bei einer weiteren vorteilhaften Variante des Hauptlagers gemäß der Erfindung ist vorgesehen, dass das Führungsrohr wenigstens einen Einschubbegrenzungsanschlag und/oder wenigstens eine Einschubbegrenzungsmarkierung aufweist, wodurch es möglich ist, das Führungsrohr so nahe wie möglich an den Inspektionsort zu verbringen.

Besonders vorteilhaft ist es, wenn das Kupplungsstück und/oder das Lagergehäuse wenigstens einen Winkelindex zwecks Festlegung einer Winkelstellung des Kupplungsstücks in oder an der Durchführung aufweist.

Ein anderer Gesichtspunkt der Erfindung betrifft ein Getriebe mit einem Getriebegehäuse mit einer verschließbaren Durchführung in einer Wand des Getriebegehäuses für ein Führungsmittel zur Führung einer Sonde in das Getriebegehäuse, wobei das Führungsmittel ein Kupplungsstück aufweist, das mit dem Führungsmittel verbunden ist, das Kupplungsstück lösbar in die Durchführung eingesetzt und in dieser festgelegt ist, wobei das Kupplungsstück komplementär zu der Durchführung ausgebildet ist, dass Kupplungsstück die Durchführung in eingesetztem Zustand verschließt und das Kupplungsstück eine Ausrichtung des Führungsmittels an einen Inspektionsort innerhalb des Getriebegehäuses vorgibt, wobei der Inspektionsort die Laufbahn eines Wälzlagers ist und wobei das Führungsmittel nur an dem Kupplungsstück festgelegt ist.

Ein solches Getriebe kann beispielsweise ein mehrstufiges Getriebe für eine Windenergieanlage sein. Das Getriebe kann alle diejenigen Merkmale einzeln oder in Kombination aufweisen, die vorstehend in Verbindung mit der Hauptlagerung beschrieben sind.

Ein weiterer Gesichtspunkt der Erfindung betrifft ein Verfahren zur Sichtprüfung von Wälzlagern oder Zahnrädern in Hauptlagerungen von Windenergieanlagen oder Getrieben, insbesondere in Getrieben von Windenergieanlagen, umfassend die Verwendung einer Sonde in Form einer endoskopischen Einrichtung und die Verwendung eines Führungsmittels für die Sonde, wobei das Führungsmittel temporär in eine hierfür vorgesehene Durchführung eines Lagergehäuses oder Getriebegehäuses eingesetzt wird und das Führungsmittel mit einem an dem Führungsmittel vorgesehenen Kupplungsstück in der Durchführung so festgelegt wird, dass das Führungsmittel auf einen Inspektionsort innerhalb der Hauptlagerung oder des Getriebes ausgerichtet ist, wobei der Inspektionsort die Laufbahn eines Wälzlagers ist.

Das Verfahren gemäß der Erfindung wird vorzugsweise unter Verwendung einer eingangs beschriebenen Hauptlagerung oder eines eingangs beschriebenen Getriebes durchgeführt.

Vorzugsweise wird das Kupplungsstück die Durchführung verschließend in die Durchführung eingesetzt.

Als Führungsmittel wird vorzugsweise ein Führungsrohr verwendet.

Bei einer vorteilhaften Variante der Erfindung ist vorgesehen, dass ein Kupplungsstück mit einer Gleitpassung für das Führungsrohr verwendet wird. Das Verfahren umfasst dabei das Verschieben des Führungsrohres in dem Kupplungsstück zwecks Annäherung an den Inspektionsort. Das Kupplungsstück kann in diesem Falle eine Klemmbefestigung bzw. ein Spannfutter für das Führungsrohr aufweisen. Auf dem Führungsrohr können Einschubbegrenzungsmarkierungen für unterschiedliche Anwendungsfälle vorgesehen sein. Alternativ oder zusätzlich kann das Führungsrohr wenigstens einen Einschubbegrenzungsanschlag aufweisen.

Die Erfindung wird nachstehend beispielsweise anhand der beigefügten Zeichnungen erläutert.

Es zeigen:

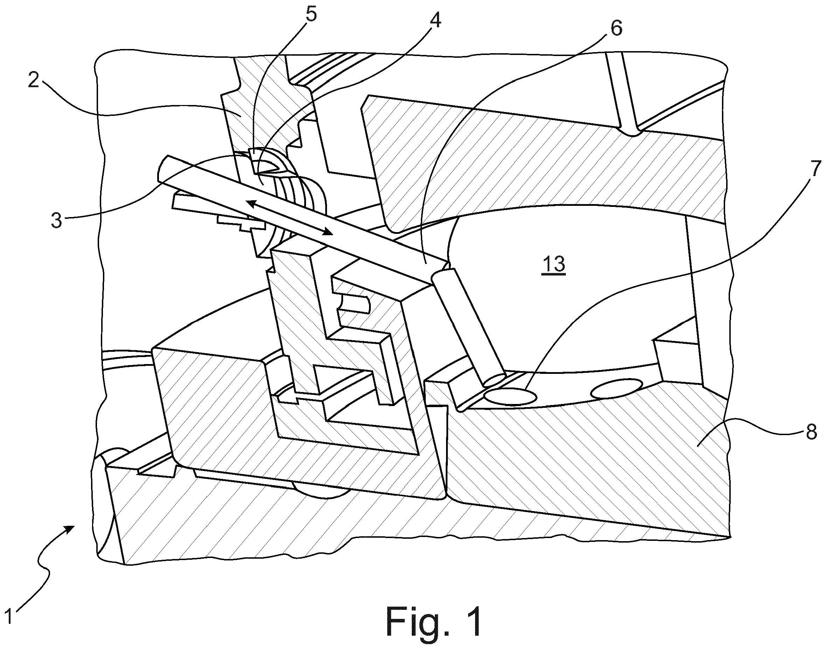

- Figur 1: eine Teil-Schnittansicht durch eine Hauptlagerung einer Windkraftanlage gemäß der Erfindung wobei die Ansicht die endoskopische Betrachtung eines ersten Inspektionsortes in Form der inneren Lauffläche des Wälzlagers veranschaulicht und
- Figur 2: eine weitere Teil-Schnittansicht durch eine Hauptlagerung einer Windkraftanlage gemäß der Erfindung zeigt, dass die endoskopische Betrachtung eines zweiten Inspektionsortes an der äußeren Lauffläche des Wälzlagers veranschaulicht.

Die nachstehend beschriebene Hauptlagerung einer Windenergieanlage gemäß der Erfindung kann beispielsweise als 2-stufiges Planetengetriebe einer Windenergieanlage ausgebildet sein. Eine solche Hauptlagerung ist als Lager des Rotors einer Windenergieanlage ausgebildet. In dem nachstehend beschriebenen Ausführungsbeispiel ist die Hauptlagerung als Getriebe 1 ausgebildet. Der Begriff Hauptlagerung im Sinne der vorliegenden Erfindung umfasst allerdings auch sogenannte getriebelose Kraftübertragungen von dem Rotor auf den Generator der Windkraftanlage. Die Art der Lagerung oder des Getriebes ist insoweit nicht kritisch für die Erfindung. Das Getriebe 1 umfasst ein Getriebegehäuse 2 mit einer Durchführung 3, die als kreisrunde Gewindebohrung mit einem Innengewinde 5 ausgebildet ist. In die Durchführung ist ein Kupplungsstück 4 lösbar eingesetzt, dass mit einem Führungsrohr 6 unverlierbar verbunden ist, wobei das Führungsrohr 5 eine Gleitpassung des Kupplungsstücks 4 durchsetzt.

Das Führungsrohr 6 ist in dem Kupplungsstück 4 längs verschiebbar sowie verdrehbar und kann mittels einer Klemmbefestigung in Form eines Spannfutters festgelegt werden.

Durch das Führungsrohr 6 kann eine Sonde, beispielsweise in Form eines Endoskops in das Getriebegehäuse 2 eingeführt werden. Das Führungsrohr 6 kann zu diesem Zwecke bis zu einem ersten Inspektionsort 7 auf einem Innenring 8 eines Wälzlagers 9 vorgeschoben worden sein, so das eine Mündung 10 des Führungsrohres 6 sich in unmittelbarer Nähe des ersten Inspektionsortes 7 befindet. Die aus der Mündung 10 austretende Sonde, beispielsweise in Form eines Endoskops oder eines Videoskops, befindet sich dann unmittelbar an dem ersten Inspektionsort 7.

Das Führungsrohr 6 wird erfindungsgemäß nur zeitweise bei Stillstand des Getriebes 1 in das Getriebegehäuse 2 eingeführt. Hierzu wird ein nicht dargestellter Verschlussstopfen oder Verschlussdeckel aus der Durchführung 3 entnommen und durch das Kupplungsstück 4 mit dem durch das Kupplungsstück 4 hindurchgeführten Führungsrohr 6 ersetzt.

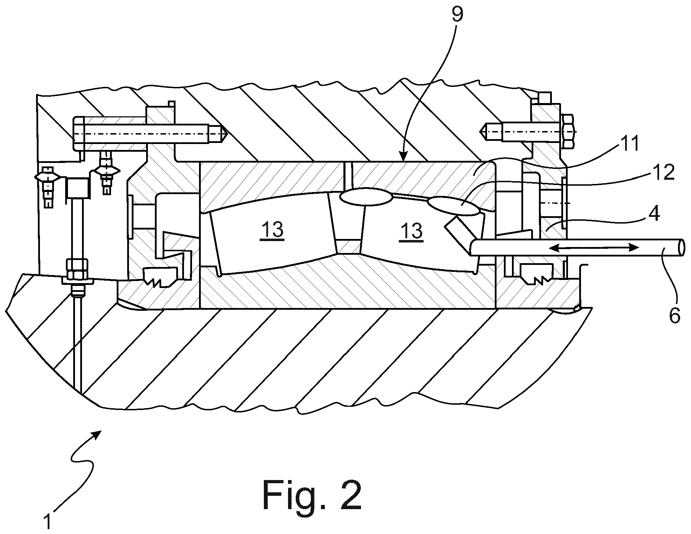

Figur 2 zeigt eine vergleichbare Situation. Bei dem Ausführungsbeispiel gemäß Figur 2 sind gleiche Bauteile mit gleichen Bezugszeichen versehen.

Bei der Situation, die in Figur 2 dargestellt ist, ist das Führungsrohr 6 bis zu einem zweiten Inspektionsort 12 an einem Außenring 11 des Wälzlagers 9 geführt.

Damit das Führungsrohr 6 nicht mit Wälzkörpern 13 des Wälzlagers 9 kollidiert, muss das Führungsrohr 6 nach Durchführung der Inspektion wieder aus dem Getriebegehäuse 2 entnommen werden.

### Bezugszeichenliste

- 1: Getriebe
- 2: Getriebegehäuse
- 3: Durchführung
- 4: Kupplungsstück
- 5: Innengewinde
- 6: Führungsrohr
- 7: erster Inspektionsort
- 8: Innenring des Wälzlagers
- 9: Wälzlager
- 10: Mündung des Führungsrohres
- 11: Außenring des Wälzlagers
- 12: zweiter Inspektionsort
- 13: Wälzkörper

## Patentansprüche

1. Hauptlagerung für eine Windenergieanlage mit einem Lagergehäuse mit einer verschließbaren Durchführung (3) in einer Wand des Lagergehäuses mit einem Führungsmittel zur Führung einer Sonde in das Lagergehäuse, wobei das Führungsmittel ein Kupplungsstück (4) aufweist, das mit dem Führungsmittel verbunden ist, das Kupplungsstück (4) lösbar in die Durchführung (3) eingesetzt und in dieser festgelegt ist, wobei das Kupplungsstück (4) komplementär zu der Durchführung (3) ausgebildet ist, das Kupplungsstück (4) die Durchführung (3) in eingesetztem Zustand verschließt und das Kupplungsstück (4) eine Ausrichtung des Führungsmittels an einen Inspektionsort innerhalb des Lagergehäuses vorgibt, wobei das Führungsmittel nur an dem Kupplungsstück (4) festgelegt ist, **dadurch gekennzeichnet, dass** der Inspektionsort die Laufbahn eines Wälzlagers (9) ist.

2. Getriebe mit einem Getriebegehäuse (2) mit einer verschließbaren Durchführung (3) in einer Wand des Getriebegehäuses (2) mit einem Führungsmittel zur Führung einer Sonde in das Getriebegehäuse (2), **dadurch gekennzeichnet, dass** das Führungsmittel ein Kupplungsstück (4) aufweist, das mit dem Führungsmittel verbunden ist, das Kupplungsstück (4) lösbar in die Durchführung (3) eingesetzt und in dieser festgelegt ist, wobei das Kupplungsstück (4) komplementär zu der Durchführung (3) ausgebildet ist, das Kupplungsstück (4) die Durchführung (3) in eingesetztem Zustand verschließt und das Kupplungsstück (4) eine Ausrichtung des Führungsmittels an einen Inspektionsort innerhalb des Getriebegehäuses (2) vorgibt, wobei der Inspektionsort die Laufbahn eines Wälzlagers (9) ist und wobei das Führungsmittel nur an dem Kupplungsstück (4) festgelegt ist.

3. Hauptlagerung nach Anspruch 1 oder Getriebe nach Anspruch 2, **dadurch gekennzeichnet, dass** das Führungsmittel als Führungsrohr (6) ausgebildet ist.

4. Hauptlagerung nach einem der Ansprüche 1 oder 3 oder Getriebe nach einem der Ansprüche 2 oder 3, **dadurch gekennzeichnet, dass** die Durchführung einen Befestigungsflansch für das Kupplungsstück (4) aufweist.

5. Hauptlagerung nach einem der Ansprüche 1 oder 3 bis 4 oder Getriebe nach einem der Ansprüche 2 bis 4, **dadurch gekennzeichnet, dass** die Durchführung (3) ein Schraubgewinde aufweist, welches komplementär zu einem Schraubgewinde des Kupplungsstücks (4) ausgebildet ist.

6. Hauptlagerung nach einem der Ansprüche 1 oder 3 bis 5 oder Getriebe nach einem der Ansprüche 2 bis 5, **dadurch gekennzeichnet, dass** das Kupplungsstück (4) eine Gleitpassung für das Führungsrohr (6) aufweist.

7. Hauptlagerung oder Getriebe nach Anspruch 6, **dadurch gekennzeichnet, dass** die Gleitpassung Mittel zur Klemmbefestigung des Führungsrohres (6) aufweist.

8. Hauptlagerung nach einem der Ansprüche 1 oder 3 bis 7 oder Getriebe nach einem der Ansprüche 2 bis 7, **dadurch gekennzeichnet, dass** das Führungsrohr (6) wenigstens einen Einschubbegrenzungsanschlag und/oder wenigstens eine Einschubbegrenzungsmarkierung aufweist.

9. Hauptlagerung nach einem der Ansprüche 1 oder 3 bis 8 oder Getriebe nach einem der Ansprüche 2 bis 8, **dadurch gekennzeichnet, dass** das Kupplungsstück (4) und/oder das Lagergehäuse/Getriebegehäuse (2) wenigstens einen Winkelindex zwecks Festlegung einer Winkelstellung des Kupplungsstücks (4) in oder an der Durchführung (3) aufweist.

10. Verfahren zur Sichtprüfung von Wälzlagern oder Zahnrädern in Hauptlagerungen oder in Getrieben von Windenergieanlagen, umfassend die Verwendung einer Sonde in Form einer endoskopischen Einrichtung und die Verwendung eines Führungsmittels für die Sonde, wobei das Führungsmittel temporär in eine hierfür vorgesehene Durchführung eines Lagergehäuses oder Getriebegehäuses (2) eingesetzt wird und das Führungsmittel mit einem an dem Führungsmittel vorgesehenen Kupplungsstück (4) in der Durchführung (3) so festgelegt wird, dass das Führungsmittel auf einen Inspektionsort (7) innerhalb der Hauptlagerung oder innerhalb des Getriebes (1) ausgerichtet ist, **dadurch gekennzeichnet, dass** der Inspektionsort die Laufbahn eines Wälzlagers ist.

11. Verfahren nach Anspruch 10, **dadurch gekennzeichnet, dass** das Kupplungsstück (4) die Durchführung (3) verschließend in diese eingesetzt wird.

12. Verfahren nach einem der Ansprüche 10 oder 11, **gekennzeichnet durch** die Verwendung eines Führungsrohres (6) als Führungsmittel.

13. Verfahren nach Anspruch 12, **gekennzeichnet durch** die Verwendung eines Kupplungsstücks (4) mit einer Gleitpassung für das Führungsrohr (6), wobei das Verfahren das Verschieben des Führungsrohres (6) in dem Kupplungsstück (4) zwecks Annäherung an den Inspektionsort (7) umfasst.

## Claims

1. Main bearing for a wind turbine, comprising a bearing housing having a closable passage (3) in a wall of the bearing housing having a guide means for guiding a probe into the bearing housing, the guide means having a coupling piece (4) which is connected to the guide means, the coupling piece (4) being removably inserted into the passage (3) and fixed therein, the coupling piece (4) being complementary to the passage (3), the coupling piece (4) closing the passage (3) in the inserted state and the coupling piece (4) defining an orientation of the guide means toward an inspection site within the bearing housing, and the guide means being fixed only to the coupling piece (4), **characterized in that** the inspection site is the raceway of a rolling bearing (9).

2. Gearbox, comprising a gearbox housing (2) having a closable passage (3) in a wall of the gearbox housing (2) having a guide means for guiding a probe into the gearbox housing (2), **characterized in that** the guide means has a coupling piece (4) which is connected to the guide means and the coupling piece (4) is removably inserted into the passage (3) and fixed therein, the coupling piece (4) being complementary to the passage (3), the coupling piece (4) closing the passage (3) in the inserted state and the coupling piece (4) defining an orientation of the guide means toward an inspection site within the gearbox housing (2), the inspection site being the raceway of a rolling bearing (9), and the guide means being fixed only to the coupling piece (4).

3. Main bearing according to claim 1 or gearbox according to claim 2, **characterized in that** the guide means is designed as a guide tube (6).

4. Main bearing according to either claim 1 or claim 3 or gearbox according to either claim 2 or claim 3, **characterized in that** the passage has a fastening flange for the coupling piece (4).

5. Main bearing according to any of claims 1 or 3 to 4 or gearbox according to any of claims 2 to 4, **characterized in that** the passage (3) has a screw thread which is complementary to a screw thread of the coupling piece (4).

6. Main bearing according to any of claims 1 or 3 to 5 or gearbox according to any of claims 2 to 5, **characterized in that** the coupling piece (4) has a sliding fit for the guide tube (6).

7. Main bearing or gearbox according to claim 6, **characterized in that** the sliding fit has means for clamping the guide tube (6).

8. Main bearing according to any of claims 1 or 3 to 7 or gearbox according to any of claims 2 to 7, **characterized in that** the guide tube (6) has at least one insertion limit stop and/or at least one insertion limit marking.

9. Main bearing according to any of claims 1 or 3 to 8 or gearbox according to any of claims 2 to 8, **characterized in that** the coupling piece (4) and/or the bearing housing/gearbox housing (2) has at least one angular index for the purpose of defining an angular position of the coupling piece (4) in or on the passage (3).

10. Method for visually inspecting rolling bearings or gears in main bearings or in gearboxes of wind turbines, comprising the use of a probe in the form of an endoscopic device and the use of a guide means for the probe, the guide means being temporarily inserted into a passage provided for this purpose in a bearing housing or gearbox housing (2) and the guide means being fixed to a coupling piece (4) provided on the guide means in the passage (3) in such a way that the guide means is oriented toward an inspection site (7) within the main bearing or within the gearbox (1), **characterized in that** the inspection site is the raceway of a rolling bearing.

11. Method according to claim 10, **characterized in that** the coupling piece (4) closes the passage (3) when inserted into said passage.

12. Method according to either claim 10 or claim 11, **characterized by** the use of a guide tube (6) as guide means.

13. Method according to claim 12, **characterized by** the use of a coupling piece (4) having a sliding fit for the guide tube (6), the method comprising moving the guide tube (6) in the coupling piece (4) for the purpose of approaching the inspection site (7).

## Revendications

1. Palier principal pour une éolienne, comportant un carter de palier comportant une traversée (3) pouvant être fermée dans une paroi du carter de palier et comportant un moyen de guidage permettant de guider une sonde dans le carter de palier, le moyen de guidage présentant une pièce d'accouplement (4), laquelle est reliée au moyen de guidage, la pièce d'accouplement (4) étant insérée de manière amovible dans la traversée (3) et fixée dans celle-ci, la pièce d'accouplement (4) étant complémentaire à la traversée (3), la pièce d'accouplement (4) fermant la traversée (3) à l'état inséré et la pièce d'accouplement (4) spécifiant une orientation du moyen de guidage à un emplacement d'inspection à l'intérieur du carter de palier, le moyen de guidage étant fixé uniquement à la pièce d'accouplement (4), **caractérisé en ce que** l'emplacement d'inspection est la voie de roulement d'un palier à rouleaux (9).

2. Transmission comportant un carter de transmission (2) comportant une traversée (3) pouvant être fermée dans une paroi du carter de transmission (2) et comportant un moyen de guidage permettant de guider une sonde dans le carter de transmission (2), **caractérisée en ce que** le moyen de guidage présente une pièce d'accouplement (4), laquelle est reliée au moyen de guidage, la pièce d'accouplement (4) est insérée de manière amovible dans la traversée (3) et est fixée dans celle-ci, la pièce d'accouplement (4) étant complémentaire à la traversée (3), la pièce d'accouplement (4) fermant la traversée (3) à l'état inséré et la pièce d'accouplement (4) spécifiant une orientation du moyen de guidage à un emplacement d'inspection à l'intérieur du carter de transmission (2), l'emplacement d'inspection étant la voie de roulement d'un palier à rouleaux (9) et le moyen de guidage étant fixé uniquement à la pièce d'accouplement (4).

3. Palier principal selon la revendication 1 ou transmission selon la revendication 2, caractérisé(e) en ce que le moyen de guidage est conçu sous la forme d'un tube de guidage (6).

4. Palier principal selon l'une des revendications 1 ou 3 ou transmission selon l'une des revendications 2 ou 3, caractérisé(e) en ce que la traversée présente une bride de fixation pour la pièce d'accouplement (4).

5. Palier principal selon l'une des revendications 1 ou 3 à 4 ou transmission selon l'une des revendications 2 à 4, caractérisé(e) en ce que la traversée (3) présente un filetage, lequel est conçu complémentaire à un filetage de la pièce d'accouplement (4).

6. Palier principal selon l'une des revendications 1 ou 3 à 5 ou transmission selon l'une des revendications 2 à 5, caractérisé(e) en ce que la pièce d'accouplement (4) présente un ajustement coulissant pour le tube de guidage (6).

7. Palier principal ou transmission selon la revendication 6, caractérisé(e) en ce que l'ajustement coulissant présente un moyen permettant la fixation par serrage du tube de guidage (6).

8. Palier principal selon l'une des revendications 1 ou 3 à 7 ou transmission selon l'une des revendications 2 à 7, caractérisé(e) en ce que le tube de guidage (6) présente au moins une butée de limitation d'insertion et/ou au moins un marquage de limitation d'insertion.

9. Palier principal selon l'une des revendications 1 ou 3 à 8 ou transmission selon l'une des revendications 2 à 8, caractérisé(e) en ce que la pièce d'accouplement (4) et/ou le carter de palier/carter de transmission (2) présentent au moins un index angulaire dans le but de définir une position angulaire de la pièce d'accouplement (4) dans ou sur la traversée (3).

10. Procédé de vérification visuelle de paliers à rouleaux ou de roues dentées dans des paliers principaux ou dans des transmissions d'éoliennes, comprenant l'utilisation d'une sonde sous la forme d'un dispositif endoscopique et l'utilisation d'un moyen de guidage pour la sonde, le moyen de guidage étant temporairement inséré dans une traversée de carter de palier ou de carter de transmission (2) prévue à cet effet et le moyen de guidage étant fixé dans la traversée (3) à l'aide d'une pièce d'accouplement (4) prévue sur le moyen de guidage de telle sorte que le moyen de guidage est orienté au niveau d'un emplacement d'inspection (7) à l'intérieur du palier principal ou à l'intérieur de la transmission (1), **caractérisé en ce que** l'emplacement d'inspection est la voie de roulement d'un palier à rouleaux.

11. Procédé selon la revendication 10, **caractérisé en ce que** la pièce d'accouplement (4) est insérée dans la traversée (3) pour la fermer.

12. Procédé selon l'une des revendications 10 ou 11, **caractérisé par** l'utilisation d'un tube de guidage (6) comme moyen de guidage.

13. Procédé selon la revendication 12, **caractérisé par** l'utilisation d'une pièce d'accouplement (4) comportant un ajustement coulissant pour le tube de guidage (6), le procédé comprenant le déplacement du tube de guidage (6) dans la pièce d'accouplement (4) dans le but de se rapprocher de l'emplacement d'inspection (7).
